# EUROPEAN PATENT APPLICATION

(11) **EP 1 783 673 A1**
(43) Date of publication of application: **09.05.2007**
(21) Application number: 05790300.7
(22) Date of filing: 17.08.2005
(51) Int. Cl.: G06Q 10/00, G06Q 50/00

(54) **METHOD AND SYSTEM FOR THE AGRICULTURAL VALUATION OF CATTLE MANURE**

(30) Priority: 17.08.2004 ES 200402039
(71) Applicant: Agrotech Biotecnologia Aplicada, S.A., 08500 Vic (Barcelona) (ES)
(72) Inventor: BAUCELLS GUITERAS, Pere, E-08500 Vic (ES)
(74) Representative: Gallego Jiménez, José Fernando
(86) International application number: PCT/ES2005/000465
(87) International publication number: WO 2006/030052

(57) **Abstract**

A system consisting of livestock farms (2) that produce excrement; plots of arable land (3) for the agricultural utilisation of the excrement; and lorries (4) for transporting the excrement, which comprises the following steps:
a) providing at least one data server (7) in the form of a central processing and control unit that manages a database (5);
b) providing a user's client computer (12, 13) for the livestock farms (2) and the plots of arable land (3);
c) connecting the user's client computer to the data server through a data network (8);
d) providing the lorries (4) with a means of transmitting and receiving data (14) to the data server (7) through the data network;
e) determining the data for the parameters regarding the physical location of the livestock farms and the plots of arable land, and entering the data into said database (5) of said data server (7);
f) determining at all times the data about the production volume and the physicochemical characteristics of the excrement produced by each livestock farm, and entering the data into said database;
g) determining at all times the data about the excrement absorption capacity of each plot of arable land, and entering the data into said database;
h) determining at all times the data about the position and load status of all the lorries in the fleet, and entering the data into said database;
i) deciding, by means of a decision-making agent (6) that is connected to the data server, on the basis of the data about the volume and physicochemical data of the excrement produced by a livestock farm, the parameters of the absorption capacity of the plots and the parameters of availability, position and load status of the lorries in the fleet, at least one plot on which to spread the volume of excrement and at least one lorry in the fleet to transport it;
j) assigning, through said decision-making agent, the excrement associated with one or more lorries in the fleet;
k) said decision-making agent or said data server (7) sending a transport order to the assigned lorries;
l) transporting, by means of the assigned lorry or lorries, the associated excrement from each farm to the plot or plots decided in i); and
m) spreading the excrement on the assigned plot or plots.

## Description

### TECHNICAL FIELD OF THE INVENTION

The present invention relates to a procedure for the agricultural utilisation of livestock excrement, in the form of slurry and manure, and to the system whereby said procedure is performed. In particular the utilisation system is of the type that consists of a plurality of livestock farms that produce excrement; a plurality of plots of arable land on which to spread the excrement for its use as organic fertiliser; and a fleet of lorries for transporting the excrement or waste that is produced.

### PRIOR ART

The disposal of slurry produced by livestock farms is becoming a far-reaching and significant environmental problem.

Effectively, livestock excrement, known as slurry, from poultry, cattle, sheep, and, mainly, pig farms, contains large proportions of nitrogen with a very high potential risk of contamination of aquifers and the atmosphere. In Europe, this is already quite noticeable in some regions of countries like the Netherlands and Spain, where pig farming is very widespread.

The disposal or utilisation of this waste is currently carried out through a variety of alternative solutions, such as its utilisation as an energy source or as an organic fertiliser, or agricultural utilisation, with the possible mediation of intermediate processes of controlled biodegradation of the organic matter of the slurry under aerobic conditions, such as e.g. the process known as composting.

Some current models for agricultural utilisation of livestock excrement comprise the management of a system consisting of livestock farms that produce excrement, surfaces or plots of arable land on which to spread the excrement for its use as an organic fertiliser, a fleet of lorries for transporting the excrement, in a certain geographical space and, occasionally, intermediate treatment plants, e.g. composting plants. The lorries transport, in controlled hygiene conditions, the excrement produced by a livestock farm to a designated plot of arable land, on the basis of the physicochemical characteristics of the slurry or manure, the needs of the plot and the availability of lorries. There might be intermediate transport from or to the intermediate treatment plants, e.g. composting plants.

This system poses significant management and logistics problems, as the system may have a surplus or shortfall of arable land in relation to the volume of livestock waste that the system produces.

In short, the current problem is to correct the imbalance that exists between the production of and demand for waste, particularly when it is not homogeneous, neither as regards the volume produced per surface unit nor as regards its constitution, and given the very dispersed nature of the production centres (farms) and the consumption centres (plots of arable land), in terms of both geography and the capacity of supply or demand.

Furthermore, a large number of variables and parameters are involved in the production, storage and spreading or agricultural use of slurry, i.e. a large amount of information, which makes the management of this type of livestock excrement more complex.

The purpose of the present invention is to provide a procedure and system for managing the agricultural utilisation of livestock excrement in order to solve this problem.

### EXPLANATION OF THE INVENTION

A first aspect of the invention provides a procedure for the agricultural utilisation of livestock excrement, in the form of slurry and manure, in a system consisting of a plurality of livestock farms that produce the excrement; a plurality of plots of arable land on which to spread the excrement for its use as an organic fertiliser; and a fleet of lorries for transporting the excrement, according to the characterising part of the attached claim 1.

Claims 2 to 25 describe preferred embodiments of the procedure of the invention.

A second aspect of the invention discloses a system for the agricultural utilisation of livestock excrement, for putting into practice the above-described procedure, the system consisting of a plurality of livestock farms that produce the excrement; a plurality of plots of arable land on which to spread the excrement for its use as an organic fertiliser; and a fleet of lorries for transporting the excrement, according to the characterising part of the attached claim 26.

Claims 27 to 37 describe preferred embodiments of the system of the invention.

Another aspect of the present invention discloses instructions executable by computer, as described in claim 38.

Another aspect of the invention discloses a carrier medium for said instructions executable by computer.

The carrier medium can take the form of a storage medium and a carrier wave.

Another aspect of the invention discloses a computer program comprising instructions executable by computer, which causes a system for the agricultural utilisation of livestock excrement to perform the aforementioned procedure.

Persons skilled in the art will appreciate that the system and procedure disclosed in the present invention make it possible to collect, store and manage all the intricate and complex information involved in the production, storage and spreading or agricultural use of slurry.

All this is intended to improve the management of slurry, with the consequent environmental improvements that this implies.

### BRIEF DESCRIPTION OF THE DRAWINGS

Non-exclusive examples of preferred embodiments of the present invention are described below, accompanied by a set of drawings to aid a better understanding thereof, which are provided merely as a non-limiting example, wherein:
- Fig. 1: is a general diagram of the system of the present invention;
- Figs. 2 to 4: correspond to schematic images of possible user interfaces for the example of the system shown in Fig. 1; and
- Fig.5: is a schematic image showing a possible user interface for the measurement in real time of the levels of excrement in the tanks.

### DESCRIPTION OF A PREFERRED EMBODIMENT

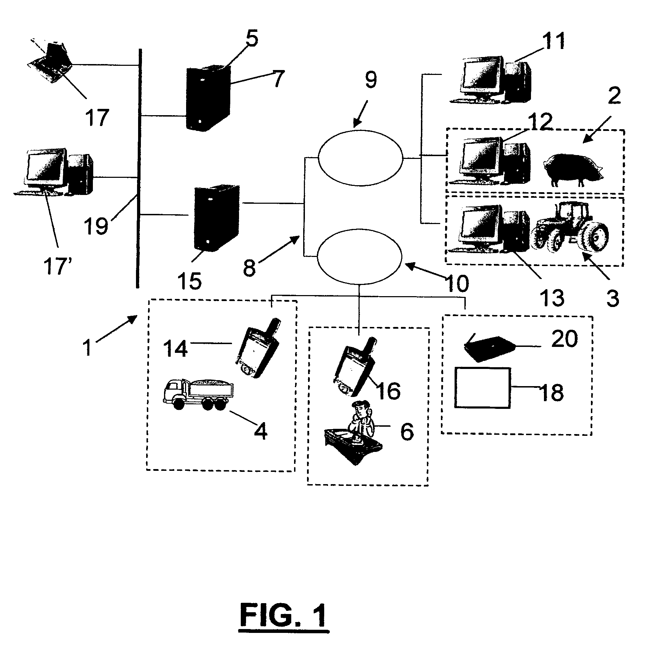

As can be seen in Fig. 1, the system 1 for the agricultural utilisation of livestock excrement, which allows an automatic, economical and environmentally-efficient management thereof, comprises, in a specific geographic environment, a plurality of livestock farms 2 that produce excrement (slurry and manure), and a plurality of surfaces or plots of arable land 3, or farms, on which to spread the excrement for its use as an organic fertiliser. This will be spread after undergoing a physicochemical treatment step, such as e.g. composting.

It should be mentioned that each of the plots could be subdivided into other smaller surfaces, or "sub-plots", although in conceptual terms there is no difference between these and the plots for the purposes of the present invention.

In Fig. 1 the livestock farms 2 are shown by the farm animal icon; the plots of arable land 3 are shown by the tractor icon, and the lorries 4 are shown by the lorry icon.

The livestock farms 2 have tanks 18 for collecting slurry.

One or more fleets of lorries 4 are involved in the system, for transporting the excrement from the livestock farms 2 to the arable farms 3.

There is a data server 7, in the form of a central processing and control unit, for the processing of a database 5 needed for the management of the system 1. These data include, among other variables, the physical location of the livestock farms 2 and the plots of arable land 3, the physical, chemical and production characteristics of the excrement produced by each livestock farm 2, the excrement absorption demand of each plot of arable land 3; the position, availability and load status of the lorries 4, data on the level of the slurry tanks 18 at the farms 2, etc.

The lorries 4 have systems that make it possible to determined their position in real time, for which they can have navigation systems, e.g. GPS or similar.

A novel feature of the system 1 according to the invention is that it includes a decision-making agent 6, or "management coordinator", which can be human or automatic, and which is linked to the server 7 for access to the database 5. The function of the decision-making agent 6 is to make decisions about the system: to decide at all times the excrement from the farms 2 to be transported or spread, the physicochemical treatment to be applied thereto, the plot or plots 3 of arable land to receive such waste, the lorry or lorries 4 to transport said decided excrement, etc.

The assignations are carried out by "tallying" criteria regarding slurry production and the demand for fertiliser, the physical, chemical and production characteristics of the excrement, the position, availability and load status of the lorries in the fleet and the level of slurry in the tanks 18 at the farms 2.

In Fig. 1, the livestock farms 2 are linked to respective computers 12 and the plots 3 are linked to respective computers 13, the computers 12, 13 being connected to the data server 7 for entering data and communicating these bidirectionally to the server 7 through a data network 8, which is preferably the Internet 9. In this case, each element in the system can have an IP address assigned to it.

The decision-making agent 6, shown in Fig. 1 by the person icon, can either be human, as in this case, or it can be a decision-making system implemented by software on a computer, e.g. the server itself 7.

In the example of an embodiment shown herein, the decision-making agent 6 is connected to the server 7 by means of a telephone network 10, e.g. a RAS network.

It is possible for users that are external to the livestock farm-arable farm-transport system to connect to the system 1, e.g. the public authorities or the general public, by means of client computers 11, in order to have access to the status of the management system 1 for slurry treatment, to register with management administration plans, etc.

Internal users 17, 17' can be connected to an internal network 19 (LAN or WAN, for example) for managing and consulting the information on the system 1 and for issuing reports about this, for example. Said data server 7 of the system also "hangs" from this internal network 19, as does possible additional equipment, e.g. a central control computer 15 for centralising communications.

The lorries 4 have a means of transmitting and receiving data 14 to the data server 7 by means of the data network 8. In the example shown herein, the lorries 4 can have hand-held computers of the "PocketPC" or PDA type 14 or similar.

For this purpose, the tanks 18 are connected to the data server 7 by means of the data network 8, through the means of transmission 20 (Fig. 1) and the means of measuring the level of slurry in the tanks 18 in real time and automatically, which can be by level sensors of a conventional type. When the sensors detect that the level of the tank 18 of accumulated slurry reaches or exceeds a predetermined minimum level, they send a "tank full" signal to the data server 7 through the telephone network 10 of the network 8.

The tanks have a means of transmitting data about the level to the server 7, in terms of both its current value and its velocity of variation.

The tanks 18 have a means generating alert signals when predetermined conditions are detected regarding the level and the velocity of variation in the level of the tanks 18, and a means of transmitting said alert signals to the server 7.

Information is therefore constantly available on the server about the state of the level of the tanks 18, which can be used in the decision-making process of the decision-making agent 6.

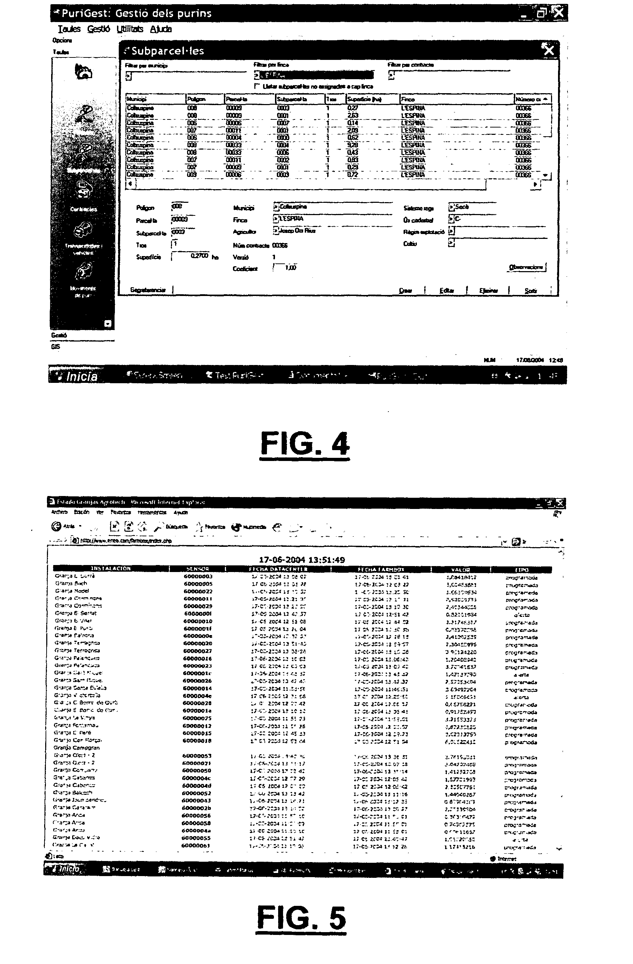

Fig. 5 shows a schematic drawing showing a possible user interface for the measurement and monitoring in real time of the levels of excrement in the tanks 18. In this Fig. 5 it is possible to see, for each farm (shown in the first column), the sensor for each of its tanks 18 (identified in the second column) and the height value for the level of the tank (shown in the fifth column).

The alert signals can be generated when the level exceeds the permitted maximum level for a tank 18, when there is a sudden drop in the level, which could indicate a leakage, when there is an anomalous gradient in the rate at which the level falls, which would indicate incidents in the level of the tank, etc. On the basis of these alarm signals, the decision-making agent 6 can decide on the specific action to take.

The livestock farms 2 conveniently have at least one buffer tank, which is linked to the accumulation tank or tanks 18, into which the excrement is poured and from which it is transported to plants where it will undergo alternative or complementary processes for its agricultural utilisation, such as treatment plants, biotransformation stations or cogeneration plants.

The basic operational procedure is as follows:

First, the data must be determined for the parameters regarding the physical location of the livestock farms 2 and the plots of arable land 3, e.g. by means of a system of UTM coordinates, and the data are entered into the database 5 of the data server 7.

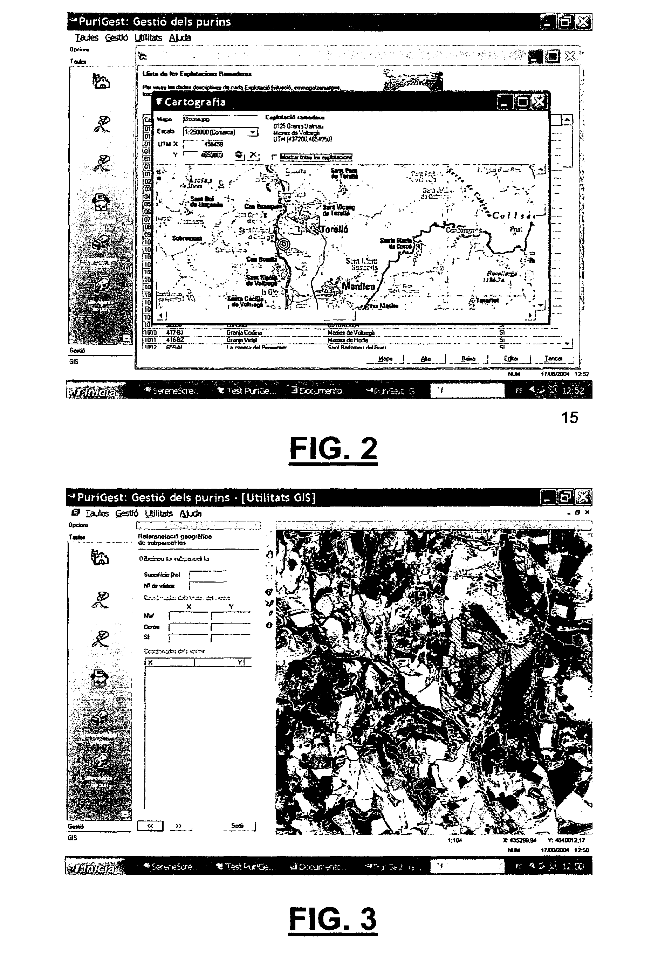

Figs. 2 and 3 each show examples of possible graphic interfaces for interaction between a user and the software application associated with the present invention. These figures show the main menu of the application in a column of icons on the left of the main screen.

On the screen shown in Fig. 2, the UTM coordinates have been entered for a particular livestock farm 2 on a cartographic map of the specific region.

On the screen shown in Fig. 3, it is possible to delimit, on a cartographic map of a different scale than that of the screen shown in Fig. 2, the perimeters of the plots 3 or sub-plots, parametrising the different data and entering or calculating the surface area.

Fig. 4 shows an example of a graphic interface that allows the different data corresponding to the plots 3 or sub-plots to be entered, which in this case are presented in municipal groupings.

In real time or when it is decided, the amount and nature of the supply of slurry is determined for each livestock farm 2 and the data about the production volume and the physical and chemical characteristics of the excrement production are sent to the database 5.

Likewise, for each plot of arable land 3 the data about its excrement absorption capacity are determined and sent by Internet 9 to the server 7.

The data regarding the position and load status of all the lorries 4 in the fleet is established at all times by means of the GPS system. These data are sent by the "PocketPC" or the PDA 14 through the RAS network 10 to the server 7.

The decision-making agent 6, on inspecting the contents of the database 5, selects, on the basis of the data regarding the volume of excrement from the livestock farms 2, the parameters of absorption capacity of the plots 2 and the parameters of availability, position and load status of the lorries 4, at least one livestock farm 2, at least one plot 3 on which to spread the volume of excrement of the livestock farm, and at least one lorry 4 to transport the excrement.

Specifically, the designated lorry 4 or lorries can be those that are closest to the livestock farm 2 in question.

Subsequently, the decision-making agent 6 or said data server 7 send the assigned lorries 4 a transport order, so that it may transport the associated excrement from each farm 2 to the decided plot or plots 3.

Then, the excrement is spread from the lorries onto the assigned plot or plots 3.

The decision to be made by the decision-making agent 6 can be a response to a request received from a livestock farm 2 (slurry supply), or a response to a request received from an arable farm 3 (slurry demand). The decision to be made can also be determined as a response to other requirements or specific events, such as a "tank full" alarm signal, a forecast of the production at a livestock farm 2, a forecast of the meteorological conditions in the area of the livestock farms 2, etc.

For the latter case, each livestock farm 2, or a group of livestock farms in close proximity, preferably have meteorological stations that are adapted for recording the atmospheric conditions in the area of the farm 2 or farms, with a means of transmitting the recorded data to the server 7 in real time. The wind conditions, temperature, humidity, and intensity of any possible rain, snow or hail are transmitted to the server 7 and can be consulted by the decision-making agent 6 in order to make decisions.

The decision-making agent 6 therefore has the fundamental role of "tallying" the supply with the demand, from the qualitative and quantitative point of view of the slurry and the arable land.

Depending on the characteristics of the excrement produced, it is possible to determine and carry out a physicochemical and/or biological treatment of the excrement produced, in particular a composting process for the reduction of N, which is applicable to a certain volume of excrement. The decision-making agent 6 will then also consider the characteristics of the waste after this treatment has been carried out.

Characterising the excrement absorption capacity of each plot of arable land 3 at all times can involve determining the nitrogen absorption capacity of the soil.

Characterising the excrement in its original state involves measuring the N and P content of the excrement. This detection can be carried out by conventional means, e.g. by near-infrared (NIR) spectroscopy.
1. The NIR detector can be installed in the lorries (4) in the fleet, and the excrement is characterised during the transport step I). For example, a situation might occur in which a specific tank 18 at a livestock farm 2 requires a lorry 4 to collect the slurry. Once it has loaded the waste, and once on the road, it is possible to conduct the qualitative analysis of the slurry, the server 7 and the decision-making agent 6 being informed of these measured characteristics of the slurry in order to make an "on-the-spot" decision as to the plot of arable land 3 where the slurry is to be transported and spread, or the alternative treatment to which the slurry being transported must be subjected.

This system and procedure makes it possible to group the farms 2, plots of arable land 3 and composting plants into clusters, which are no more than a set of entities, in this case farms 2, plots of arable land 3 and composting plants, situated in a certain geographical area. By defining a maximum radius of the cluster, it is possible to calculate the maximum distance to which livestock waste or excrement is to be transported, which in turn makes it possible to calculate the transport costs, whether for spreading it on arable land or using it in a composting plant. The maximum radius will include a sub-set of lands and a given number of composting plants with a specific capacity. The cluster may have a surplus or shortfall of land in relation to the volume of livestock waste that is produced in the cluster.

The system and procedure of the invention make it possible to provide arable land with the correct and necessary quantities of nutrients for cultivation, avoiding the accumulation thereof in the soil and the lixiviation of harmful matter to subterranean waters with the consequent contamination of aquifers, through a procedure that allows the comprehensive online management of all the livestock farms 2 and arable farms 3. They make it possible to optimise resources, save energy and improve the environment, through the utilisation and integration of new technologies.

The system 1 of the present invention collects, stores, lists and manages the information generated or required for each of the areas involved in the management of slurry. For the system to have all the necessary information, it has different means of recording and displaying the information, served by the server 7, with the integration of new technologies.

## Claims

1. Procedure for the agricultural utilisation of livestock excrement, in the form of slurry and manure, in a system consisting of a plurality of livestock farms (2) that produce the excrement; a plurality of plots of arable land (3) on which to spread the excrement for its use as an organic fertiliser; and a fleet of lorries (4) for transporting the excrement, **characterised in that** it comprises the following steps:
a) providing at least one data server (7) in the form of a central processing and control unit that manages a database (5);
b) providing a user's client computer (12, 13) for the livestock farms (2) and the plots of arable land (3);
c) connecting the user's client computer to the data server through a data network (8);
d) providing the lorries (4) with a means of transmitting and receiving data (14) to the data server (7) through the data network;
e) determining the data for the parameters regarding the physical location of the livestock farms and the plots of arable land, and entering the data into said database (5) of said data server (7);
f) determining at all times the data about the production volume and the physicochemical characteristics of the excrement produced by each livestock farm, and entering the data into said database;
g) determining at all times the data about the excrement absorption capacity of each plot of arable land, and entering the data into said database;
h) determining at all times the data about the position and load status of all the lorries in the fleet, and entering the data into said database;
i) deciding, by means of a decision-making agent (6) that is connected to the data server, on the basis of the data about the volume and physicochemical data of the excrement produced by a livestock farm, the parameters of the absorption capacity of the plots and the parameters of availability, position and load status of the lorries in the fleet, at least one plot on which to spread the volume of excrement and at least one lorry in the fleet to transport it;
j) assigning, through said decision-making agent, the excrement associated with one or more lorries in the fleet;
k) said decision-making agent or said data server (7) sending a transport order to the assigned lorries;
l) transporting, by means of the assigned lorry or lorries, the associated excrement from each farm to the plot or plots decided in i); and
m) spreading the excrement on the assigned plot or plots.

2. Procedure according to claim 1, **characterised in that** the decision-making step i) comprises the following steps:
on the basis of the characteristics of the excrement produced, determining and
carrying out a physicochemical and/or biological treatment of the excrement produced, which is applicable to a specific volume of excrement;
the decision-making agent (6) selecting, on the basis of the volume of excrement produced by the livestock farm, the treatment carried out on the excrement, the parameters of absorption capacity of the plots (3) and the parameters of the availability and position and load status of the lorries (4) in the fleet, at least one plot on which to spread the volume of excrement and at least one lorry in the fleet to transport it;
said decision-making agent or said data server (7) sending a transport order to the assigned lorries;
transporting the excrement to the assigned plot or plots; and
spreading the excrement on the assigned plot or plots.

3. Procedure according to claims 1 or 2, **characterised in that** the decision-making step i) is performed in response to a request received from a livestock farm (2).

4. Procedure according to claim 4, **characterised in that** the decision-making step i) is performed in response to a request received from a plot of arable land (3).

5. Procedure according to any of the previous claims, **characterised in that** the step g) of determining at all times the excrement absorption capacity of each plot of arable land (3) involves determining the nitrogen absorption capacity.

6. Procedure according to claim 5, **characterised in that** said physicochemical and/or biological treatment of the excrement produced is a biological treatment for the reduction of the N content of the livestock excrement.

7. Procedure according to claim 6, **characterised in that** said physicochemical and/or biological treatment of the excrement produced includes the composting of the livestock excrement at a treatment plant.

8. Procedure according to any of the previous claims, **characterised in that** the step j) of assigning, through said decision-making agent, the excrement from the livestock farms (2) to a lorry (4) or lorries in the fleet is carried out by designating the lorry or lorries that are closest to the livestock farm in question.

9. Procedure according to any of the previous claims, **characterised in that** the parameters regarding the physical location of the livestock farms (2) and the plots of arable land (3) are data from a system of UTM coordinates.

10. Procedure according to any of the previous claims, **characterised in that** the position of the lorries (4) in the fleet is determined continuously in real time using a GPS or similar location system.

11. Procedure according to claim 1, **characterised in that** the step f) of determining the data about the excrement production of each livestock farm (2) involves measuring the volume and conducting a physicochemical analysis of the excrement produced.

12. Procedure according to claim 11, **characterised in that** said analysis involves measuring the N and P content of the excrement with a portable detector using near-infrared spectroscopy (NIR detector).

13. Procedure according to claim 12, **characterised in that** said NIR detector is installed in the lorries (4) in the fleet, and the excrement is **characterised** during the transport step I).

14. Procedure according to claim 13, **characterised in that** the decision-making step j) is carried out during the transport step 1).

15. Procedure according to any of the previous claims, **characterised in that** the processed data are sent from each livestock farm (2), from each plot of arable land (3) and from each lorry (4) to the data network (8), and from there to the data server (7), from which the decision-making agent (6) uses them for making decisions.

16. Procedure according to claim 15, **characterised in that** said data network (8) is the Internet (9).

17. Procedure according to claim 15, **characterised in that** each livestock farm (2), each plot of arable land (3) and each lorry (4) in the fleet is assigned an IP address.

18. Procedure according to claim 14, **characterised in that** said data network (8) comprises a local network (19).

19. Procedure according to claim 1, **characterised in that** the transmission of data about and from the lorries (4) and about and from the decision-making agent (6) is carried by means of a wireless telephone network.

20. Procedure according to any of the previous claims, **characterised in that** the transmission of data is carried out by manually or automatically entering the data into a computer terminal (12, 13, 17, 17') that is connected to the network (8).

21. Procedure according to claim 15, **characterised in that** the data is sent by manually or automatically entering the data into a "PocketPC" or PDA type terminal (14, 16) that is connected to the network (8) through a RAS telephone system.

22. Procedure according to any of the previous claims, **characterised in that** it comprises:
providing in the livestock farms (2) at least one respective tank (18) for the accumulation of excrement, into which the excrement produced is poured;
connecting the tanks (18) to the data server (7), through the data network (8);
measuring the level and the velocity of variation in the level of excrement in the tanks (18); and
transmitting the data about the level to the server (7).

23. Procedure according to claim 22, **characterised in that** it comprises the constant transmission of data to the server (7) about the level and the velocity of variation in the level of the tanks (18).

24. Procedure according to claim 23, **characterised in that** it comprises the generation of alert signals when predetermined conditions are detected regarding the level and the velocity of variation in the level of the tanks (18), and a means of transmitting said alert signals to the server (7).

25. Procedure according to claim 22, **characterised in that** it comprises providing the livestock farms (2) with at least one buffer tank, which is linked to the accumulation tank or tanks, into which the excrement is poured and from which it is transported to plants where it will undergo alternative or complementary processes for its agricultural utilisation, such as treatment plants, biotransformation stations or cogeneration plants.

26. System (1) for the agricultural utilisation of livestock excrement, applying a procedure according to any of claims 1 to 25, the system consisting of a plurality of livestock farms (2) that produce the excrement; a plurality of plots of arable land (3) on which to spread the excrement for its use as an organic fertiliser; and a fleet of lorries (4) for transporting the excrement, **characterised in that** it comprises:
a database (5), in a data server (7) of a central processing and control unit, for storing data about the physical location of the livestock farms and the plots of arable land; the physical, chemical and production characteristics of the excrement produced by each livestock farm; the excrement absorption demand of each plot of arable land; and the position, availability and load status of the lorries in the fleet;
a means of determining the position of the lorries in the fleet; and
a decision-making agent (6) that is linked to the database (5), to assign excrement from the livestock farms (2) to plots of arable land (3) and one or more lorries (4) in the fleet to transport the excrement from the livestock farms, on the basis of the physical, chemical and production characteristics of the excrement, the excrement absorption demand, and the position, availability and load status of the lorries in the fleet.

27. System according to claim 26, **characterised in that** it comprises at least one data server (7) in a central processing and control unit, which implements and manages said database.

28. System according to claim 27, **characterised in that** the livestock farms (2), the plots (3) and the decision-making agent (6) have respective user's client computers (12, 13, 16) that are linked to the data server (7) for entering data and communicating it bidirectionally to the data server and the decision-making agent (6) through a data network (8).

29. System according to claims 27 or 28, **characterised in that** the lorries (4) have a respective means of transmitting data (14), which is adapted to receive instructions from the data server (9) and/or the decision-making agent (6).

30. System according to claim 28, **characterised in that** said data network (8) includes the Internet (9).

31. System according to claim 28, **characterised in that** said data network (8) includes a telephone network (10).

32. System according to any of claims 26 to 31, **characterised in that** the livestock farms (2) comprise:
tanks (18) for the accumulation of slurry, into which the slurry produced is poured, which are connected to the data server (7) through the data network (8); and
a means of measuring the level and the velocity of variation in the level of the excrement in the tanks (18).

33. System according to claim 32, **characterised in that** it comprises a data transmission means for the constant transmission of data to the server (7) about the level and the velocity of variation in the level of the tanks (18).

34. System according to claim 33, **characterised in that** it comprises a means of generating alert signals when predetermined conditions are detected regarding the level and the velocity of variation in the level of the tanks (18), and a means of transmitting said alert signals to the server (7).

35. System according to claim 32, **characterised in that** the livestock farms (2) have at least one buffer tank, which is linked to the accumulation tank or tanks (18), into which the excrement is poured and from which it is transported to plants where it will undergo alternative or complementary processes for its agricultural utilisation, such as treatment plants, biotransformation stations or cogeneration plants.

36. System according to claim 26, **characterised in that** the lorries are equipped with detectors using near-infrared spectroscopy (NIR detectors) for characterising the excrement as it is being transported.

37. System according to claim 26, **characterised in that** the livestock farms (2) comprise a respective meteorological station that is adapted to record the atmospheric conditions in the area of the farm, with a means of transmitting the recorded data to the server (7) in real time.

38. Instructions executable by computer that when executed by computer (7, 17, 17') cause the computer to perform a procedure for the agricultural utilisation of livestock excrement, in the form of slurry and manure, in a system consisting of a plurality of livestock farms (2) that produce the excrement; a plurality of plots of arable land (3) on which to spread the excrement for its use as an organic fertiliser; and a fleet of lorries (4) for transporting the excrement, which comprises the following steps:
determining the data of the parameters regarding the physical location of the livestock farms and the plots of arable land, and entering the data into a database (5) of a data server (7);
determining at all times the data about the production volume and the physical and chemical characteristics of the production of excrement for each livestock farm, and entering the data into said database;
determining at all times the data about the excrement absorption capacity of each plot of arable land, and entering the data into said database;
determining at all times the data about the position and load status of all the lorries in the fleet, and entering the data into said database;
deciding, by means of a decision-making agent (6) that is connected to the data server, on the basis of the data about the volume of excrement from the livestock farm, the parameters of the absorption capacity of the plots and the parameters of availability, position and load status of the lorries in the fleet, at least one plot on which to spread the volume of excrement and at least one lorry in the fleet to transport it;
assigning, through said decision-making agent, the excrement associated with one or more lorries in the fleet;
said decision-making agent or said data server sending a transport order to the assigned lorries;

39. A carrier medium for the instructions executable by computer in claim 30.

40. A carrier medium according to claim 39, which takes the form of a storage medium.

41. A carrier medium according to claim 39, which takes the form of a carrier wave.

42. A computer program that comprises instructions executable by computer that cause a system for the agricultural utilisation of livestock excrement to perform a procedure according to any of claims 1 to 25.
